# EUROPEAN PATENT APPLICATION

(11) **EP 1 775 954 A1**
(43) Date of publication of application: **18.04.2007**
(21) Application number: 05300824.9
(22) Date of filing: 14.10.2005
(51) Int. Cl.: H04N 7/24, H04N 7/68, H04N 7/64, G06T 9/00

(54) **Method and apparatus for reconstructing a video frame for spatial multi-layer video sequence**

(71) Applicant: Thomson Licensing, 92100 Boulogne-Billancourt (FR)
(72) Inventor: Chen, Ying Bld. 3, 103 Chenghua Yuan, 100083 Beijing (CN); Xie, Kai 8/F, Bld. A, Technology Fortune Center, 100085 Beijing (CN); Zhang, Feng, 100871 Beijing (CN)
(74) Representative: Rittner, Karsten

(57) **Abstract**

A method for reconstructing a video frame in a spatially scalable environment with a base-layer (BL) and an enhancement-layer (EL), wherein frames are intra-coded (I), predicted (P) or bi-directionally predicted (B), and wherein groups of frames (GOP) are defined containing per layer at least two low-pass frames (I,P), comprises reconstructing a missing or unusable frame by copying, interpolating, predicting or upsampling, wherein copying other frames or interpolating between other frames is used for reconstruction of a hierarchical B-frame, upsampling the motion information (EC4, EC10) and/or residual of a BL frame is used if the missing or unusable frame is an EL frame and its corresponding BL frame is available, and the corresponding BL frame is reconstructed and upsampled if the missing or unusable frame is an EL frame and both BL low-pass frames and not both EL low-pass frames of the current group are available.

## Description

### Field of the invention

This invention relates to a method and apparatus for reconstructing a video frame, eg. a frame that was lost or is unusable, in a multi-layer environment, such as provided by Scalable Video Coding (SVC).

### Background

SVC defines temporal, SNR and spatial scalability. Advanced Video Coding (AVC/H.264) uses intra-coding (I), prediction (P) and bi-directional prediction (B) on frame level and on macroblock (MB) level, and has shown its excellent coding efficiency, but does not consider scalability. To give more functionality to the video codec, the motion picture expert group (MPEG) considered providing an SVC standard in 2003. A Working Draft 2 and a reference software description (JSVM) were given in the Buzan meeting (ISO/IEC JTC1, "Working Draft 2 of ISO/IEC 14496-10:2005/AMD1 Scalable Video Coding", WG11 N7086, April 2005, Buzan, Korea). SVC provides e.g. a dual spatial layer structure, including a base-layer (BL) that has AVC compliant hierarchical B-frame GOP structure and a spatial enhancement-layer (EL). The BL of JSVM is compatible with AVC, and most its components are used in JSVM. Frames are usually transported in individual packets of a network adaptation layer (NAL), with one packet per frame. Thus, loss of a packet leads to loss of the frame.

Since the whole JSVC is based on AVC techniques, there are more challenges for the error concealment. SVC is designed for network adaptive or security adaptive applications. An advantage of the scalabilities is that when the network or the device capability changes, the decoder can decode the variable packets to provide the best-effort display.

Usage of hierarchical B-frames in the BL and motion compensated temporal filtering (MCTF) in the EL provide temporal scalability that gives convenience and flexibility for the error concealment among a single layer. Spatial scalability also gives information for the EL if a whole frame is lost and the BL is successfully received. Although it is possible to predict from the upsampled reconstructed BL frame, it is not always the best solution. One reason is that e.g. if the nearby EL frames have been reconstructed correctly and the content has low motion, then prediction from the same layer is often more accurate, especially when adding some BL motion information. Another reason is that it is not always possible to get the reconstructed BL by a simple single-loop decoding, which only gives the motion vectors and residual of the BL when decoding a dual layer bit stream and the MB type is not Intra_BL (a mode that encodes the spatial prediction residual, ie. the difference between an upsampled reconstructed MB of the BL and the original high-resolution MB of the EL). The upsampling of the BL reconstruction only works with a multiple-loop decoding strategy.

Moreover, since the BL motion vector (MV) and residual can also more or less represent the property of the high resolution frame, combining the BL motion and residual with the EL reference can always give a better solution.

H.264/AVC provides some MB mode flags that indicate the BL information to be used for a particular EL MB. Motion and residuals are used as predictors for the EL.
The base_layer_mode_flag indicates that the MVs and the MB partitioning of the corresponding MB of the BL picture are inherited by the corresponding EL MBs.
The residual_prediction_flag specifies whether the reconstructed residual signal of the corresponding BL MB is used for prediction of the residual of the current MB.
The motion_prediction_flag_10 and motion_prediction_flag_I1 respectively specify whether the BL MV or the spatial MV predictors are used for predicting the list_0 or list_1 MVs of the MB partition. P-frames get their reference frame numbers from list_0, B-frames from list_0 and list_1.
The intra_base_flag specifies the Intra_BL mode for the MB. If the BL frame is not lost and its corresponding EL frame is lost, the decoding of the EL will be impossible if there is inter-layer prediction. The CABAC (context-adaptive binary arithmetic code) decoding can not be correctly handled.

In practical applications, the BL packets can also be lost.

### Summary of the Invention

It is desirable to conceal errors that result from frame loss, so that the disturbance of the viewer is minimized.

The present invention provides a framework of frame loss error concealment techniques for SVC that are relatively simple and advantageous for practical applications, such as real-time decoders, e.g. for embedded systems. Basically, two strategies are provided for error concealment among the same spatial layer: with or without consideration of nearby motion fields. For EL frame loss, besides the texture upsampling from the BL (which is less efficient than eg. intra-layer prediction), solutions are given that take advantage of the BL information, specifically the BL motion vector and residual.

Frame copy or frame average error concealment techniques are very effective and can be provided by forced loss of some packets that have high temporal levels, such as the B-frames with even picture order count (POC) numbers, as described below.

If a BL packet is lost that was used to predict the corresponding EL image, the EL image can be reconstructed using the already decoded frames or previous MVs.

The invention refers to a video frame in a video sequence with at least two spatial layers being a base-layer (BL) and an enhancement-layer (EL), wherein frame coding types are intra-coded (I), predicted (P) or bi-directionally predicted (B), and wherein for a predicted frame (P-frame) at least one reference frame and for a bi-directionally predicted frame (B-frame) at least two reference frames are defined, and wherein groups of frames (GOP) are defined and a group contains per layer at least two low-pass frames being intra coded (I) or predicted (P).
According to the invention, a method for reconstructing such video frame comprises the steps of
detecting that data for the video frame are missing or are unusable for reconstruction,
determining the layer and the coding type of the unusable or missing frame,
determining which BL and/or EL low-pass frames are available for the current group (GOP), and
reconstructing the missing or unusable frame by a copy, interpolation, prediction or upsampling operation according to the following conditions:
if the missing or unusable frame is a hierarchical B-frame (ie. high-pass frame) of the BL, then copying a reference frame of the current group, or interpolating between two reference frames of the current group (may depend on e.g. if it is used as reference, but also on motion, temporal distance of the reference frame, coding type of the lost frame etc.),
if the missing or unusable frame is an EL frame and its corresponding BL frame is available, then upsampling the motion information and/or residual of said BL frame, and
if the missing or unusable frame is an EL frame and both BL low-pass frames and not both EL low-pass frames of the current group are available, reconstructing and upsampling the corresponding BL frame.

In one embodiment of the invention, the method comprises the following conditional steps for the case that the determined layer of the lost or unusable frame to be reconstructed is EL:
If the BL frame corresponding to the missing or unusable EL frame and the BL and EL low-pass frames for the current group (GOP) are available, then upsampling the corresponding BL motion information,
otherwise if the corresponding BL frame and the BL low-pass frames for the current GOP are available, and not both EL low-pass frames for the current GOP are available, then reconstructing and upsampling said corresponding BL frame, otherwise if the BL frame corresponding to the missing or unusable EL frame is not available or a BL low-pass frame for the current GOP is not available, then interpolating between nearest available EL frames or EL reference frames, and
if both BL low-pass frames and EL low-pass frames of the current GOP are available, then reconstructing and upsampling the BL frame.

In one embodiment of the invention, the method further comprises the following steps:
If the determined layer of the lost or unusable frame is BL and
if the type is intra coded (I-frame), then copying the nearest available reference frame,
if the type is predicted (P-frame) and its reference frame is available, then copying its reference frame,
if the type is bi-directionally predicted (B-frame) and its corresponding reference frames are available, then interpolating between its corresponding reference frames, if one or both reference frames are missing and the corresponding EL frame is available, then reconstructing and subsampling the corresponding EL frame, and
if one or both reference frames are missing and the corresponding EL frame is not available, then predicting from or interpolating between the nearest available BL frames.

In one embodiment of the invention, the method further comprises the step of storing the reconstructed frame if it has an even picture order count (POC) number, so that it can be used as reference frame for other frames.

In one embodiment of the invention, said upsampling the motion information and/or residual of a BL frame is further specified in that for inter-coded (P,B) EL macroblocks the motion information of the corresponding BL macroblock (MB) is upsampled, and for intra-coded (I) EL MBs the residual of the corresponding BL MB is upsampled.

In one embodiment of the invention, the motion information is set to zero when the corresponding BL MB is intra-coded and its motion information should be upsampled.

In one embodiment of the invention, the motion information is predicted from spatially adjacent neighbouring MBs (a mode called spatial direct prediction) when upsampling the corresponding BL motion information, if the corresponding BL MB is intra-coded.

Further according to the invention, a method for decoding a first video frame that was encoded using bi-directional prediction, wherein for the first video frame two reference frames are given, comprises the steps of
detecting that the motion information of the first video frame that was encoded using bi-directional prediction is lost or unusable, wherein the motion information is required for constructing from the video frame one or more further video frames,
reconstructing the texture of the first video frame, assigning the motion information of the two reference frames to the reconstructed first video frame,
detecting that for the reconstruction of a second video frame the motion information of the first video frame is required,
determining which of said two reference frames is in display order temporally nearer to the second video frame, and
predicting the second video frame, wherein the motion information of only said selected reference frame is used.

Further according to the invention, a method for decoding video frames comprises the steps of
receiving an encoded sequence of video frames, wherein
I-frames, P-frames and B-frames are contained,
decoding and storing the I- and P-frames,
determining B-frames at defined positions within the sequence of video frames,
if B-frames other than said determined frames exist, then decoding the B-frames other than said determined frames, and
ignoring or deleting data of said determined B-frames and replacing them with copies of other, already decoded frames or with frames obtained by interpolation of already decoded frames.

Preferably said defined positions within the sequence of video frames are temporally equidistant, as in the example below.

Further according to the invention, an apparatus for reconstructing a video frame in a video sequence with two spatial layers being a BL and an EL, wherein for a P-frame one reference frame and for a B-frame two reference frames are defined, and wherein GOPs are defined and a GOP contains per layer at least two low-pass frames (meaning I- or P-frames), comprises
means for detecting that data for a frame are missing or are unusable for reconstructing the frame,
means for determining the layer and the coding type of the unusable or missing frame,
means for determining which BL and EL low-pass frames are available for the current group (GOP), and
means for reconstructing the missing or unusable frame with the result of a copy, interpolation, prediction or upsampling operation according to the following conditions:
if the missing or unusable frame is a hierarchical B-frame, then copying a reference frame of the current group, or interpolating between two reference frames of the current group,
if the missing or unusable frame is an EL frame and its corresponding BL frame is available, then upsampling the motion information and/or residual of said BL frame, and
if the missing or unusable frame is an EL frame and both BL low-pass frames and not both EL low-pass frames of the current group are available, reconstructing and upsampling the corresponding BL frame.

Further according to the invention, an apparatus for decoding a first video frame being a B-frame, wherein for the first video frame two reference frames are given, comprises
means for detecting that the motion information of the first video frame that was encoded using bi-directional prediction is lost or unusable, wherein the motion information is required for constructing from the video frame one or more further video frames,
means for reconstructing the texture of the first video frame,
means for assigning the motion information of the two reference frames to the reconstructed first video frame, means for detecting that for the reconstruction of a second video frame the motion information of the first video frame is required,
means for determining which of said two reference frames is in display order temporally nearer to the second video frame, and
means for predicting the second video frame, wherein the motion information of only said selected reference frame is used.

Further according to the invention, an apparatus for decoding video frames comprises
means for receiving an encoded sequence of video frames, wherein I-, P- and B-frames are contained,
means for decoding and storing the I- and P-frames,
means for determining B-frames at defined positions within the sequence of video frames,
means for decoding B-frames other than said determined frames if such B-frames other than said determined frames exist, and
means for deleting or ignoring data of said determined
B-frames and means for replacing them with copies of other, already decoded frames or with frames obtained by interpolation of already decoded frames.

Preferably said defined positions within the sequence of video frames are temporally equidistant.

Advantageous embodiments of the invention are disclosed in the dependent claims, the following description and the figures.

### Brief description of the drawings

Exemplary embodiments of the invention are described with reference to the accompanying drawings, which show in
Fig.1 reference frames in a GOP;
Fig.2 a flow-chart of simple error concealment for BL;
Fig.3 a flow-chart of error concealment for EL;
Fig.4 a GOP with a hierarchical B-frame structure; and
Fig.5 a flow-chart of error concealment for EL.

### Detailed description of the invention

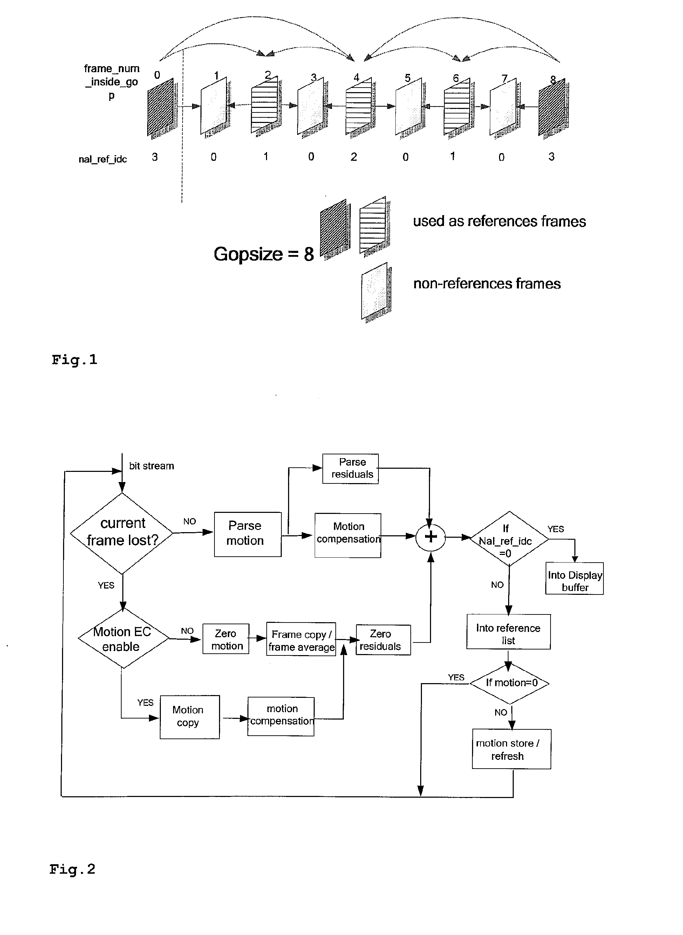

Fig.1 shows the usage of reference frames within a group of pictures (GOP) for a single layer, as used in AVC. Each GOP has exemplarily eight pictures 1, ..., 8 including one low-pass picture 8. This is a P-frame or I-frame. The other frames 1, ..., 7 are bi-directionally predicted or B-frames, wherein the low-pass frames of the previous and the current GOP 0,8 are used for prediction. In a first step the temporally median frame 4 is predicted from the low-pass frames 0,8. Also in each of the following steps two reference frames are used to predict the median frame between them.

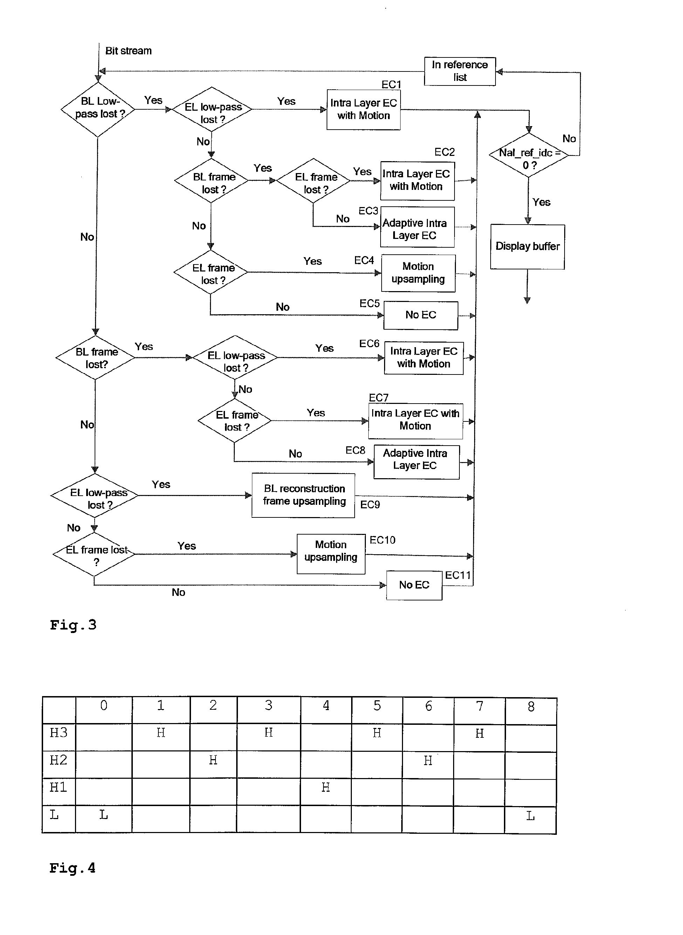

This can be regarded as a hierarchical B-frame structure, as shown in Fig.4. Two low-pass pictures L, which can be intra-coded (I-frames) or predicted (P-frames), refer to a group of pictures (GOP). The pictures that are temporally between the low-pass pictures are called high-pass frames and are bi-directionally predicted (B-frames). They are classified into eg. three hierarchical levels H1,H2,H3. Those B-frames of lower levels can be references to respectively higher levels, eg. the frame in position 4 can be reference for all other low-pass frames, and frames in positions 2 and 6 can be references for frames in positions 1,3,5,7. The frame numbers of the reference frames are provided by a reference frame list. For SVC, both layers can have this structure, ie. SVC uses BL low-pass frames, EL low-pass frames, BL high-pass frames and EL high-pass frames.

The present disclosure aims at minimizing the effect of a lost frame, eg. during transmission. First, error concealment techniques are provided which only utilize the information of the same layer. Among these techniques there are basically two solutions, with motion information or without motion information. If without motion information, P-frames are reconstructed by just a frame copy from the nearest frame of the reference list, and B-frames are reconstructed by a frame average of the two nearest frames of the two reference lists.

If error concealment utilizes the motion information, based on the hierarchical B-frame GOP structure or MCTF structure, all the motion fields of the frames which will be used further as reference frames should be stored, in order to give the best predicted motion vector for any lost frame. Since all the motion information will be stored with the reconstructed frames into the reference lists, the stored motion vectors can be used to predict the motion vectors of the lost frames.

Manual frame loss or intentional frame drop which utilizes the simple frame copy or frame average to improve the decoding speed can also be used.

The European Patent Application EP05300477 describes an example of how the packet loss can be detected and how the POC, frame number etc. information can be generated using the hierarchical B-frame or the MCTF GOP structure. The present invention focuses on the concealment of a whole frame that is lost.

First it will be described separately how some basic techniques work, and then they are integrated to give an error concealment strategy for the whole system.

### 1. Intra-Layer Error concealment for hierarchical B-frames and MCTF frames

This section describes how to deal with the error concealment based only on the information of the same layer.

### 1.1 Intra-Layer Error Concealment without motion

A low-pass frame can be a P- or I-frame. If it is lost, it is treated as a P-frame and replaced by a frame copy of the picture at the top of the reference list_0.

If a high-pass frame is lost, it is a B-frame and has two reference pictures defined, which are the pictures at the top of the reference lists list_0 and list_1. The lost B-frame is reconstructed by an average of these two pictures.

The reconstructed frame is pushed into the reference lists, like the decoder does with other available frames.

Also if a high-pass frame is lost, we can just get a frame copy from the top of the reference list_0, so that there are two reference picture copies, which are a copy of the top of the reference list_0 and the top of the reference list_1 respectively. Those two frames are combined as the reference, and the reference is stored at the specified lists if the lost frame is supposed to be a reference frame. We call these frames Double Description frames here and denote them as D0 and D1.

For MCTF or hierarchical B-frame structures that have long GopSize, the present invention uses this method to reduce the possible overlap artefacts. For other following decoding processes, if a frame in the reference list is a Double Description frame, based on the POCs of the current frame and the DD frame, the real reference can be chosen between the DD frames. I.e. when a DD frame is needed as reference for reconstructing a lost frame, it is determined which of the two reference frames is in display order temporally nearer to the lost frame. If the current POC is large, it will use D1 as the real reference and if the current POC is small, it will use D0 as the real reference.

Actually, since inside a GOP, the construction of DD frames is simple, because the frames of the reference lists are just copied. Actually it is not necessary to store two frames, instead only the reference indices need to be given and the indices for the DD frames updated. Each time when a DD frame is referred, after the decision of whether D0 or D1 is to be used, the D0 or D1 frame can be borrowed from the lists and used for reconstruction of the current frame. This is particularly advantageous to achieve low memory consumption.

### 1.2 Intra-Layer Error Concealment with motion

For each GOP, we only consider the GopSize+1 frames, and each of them has an index frame_num_inside_gop from 0 to GopSize. Among them, the odd frames are non-reference frames. Eg. if GopSize is 8, as shown in Fig.1, they have odd indices frame_num_inside_gop of 1,3,5,7. Before the first odd frame 1 is decoded, all the even frames 0,2,4,6,8 have been decoded. During the decoding process, the motion field will also be stored as part of the reference picture in reference lists.

If one frame is lost, it is replaced by the first element of the reference list and uses the motion vectors and the already reconstructed frames. A simple solution is just to copy the motion vectors and use these motion vectors for the motion compensation. Eg. if frame 3 is lost in Fig.1, forward motion field of frame 2 can be duplicated as the forward motion field of frame 3, and backward motion field of frame 4 and be duplicated as the backward motion field of frame 3.

### 2. Inter-layer Error Concealment

The present invention uses inter-layer redundancy to achieve the error concealment of the lost spatial EL frame using the information of the BL.

It is evoked only when the corresponding BL is successfully received; otherwise, Intra-layer error concealment is used for the lost EL frame, which is a high resolution frame.

### 2.1 Inter-layer Error Concealment with only motion information of the BL

In this case, the upsampled motion field of the BL is used as the motion field of the EL.
The modes of MBs are set to BLSkip. If the BL MB is Intra-coded, the corresponding MBs in the EL are set to Intra_BL, and the MB of the BL is reconstructed and upsampled for the EL MBs, which is also possible if the BL MB is Inter-coded. Upsampled motion will be used for the corresponding EL MBs.

Regarding the MB partitioning, reference indices of BL 3D MVs are also inherited by the MB of the corresponding EL. A 3D MV of the form {reference_id, MVₓ,MV_{y}} is for specifying which reference frame is used to compensate the current displacement {MVₓ,MV_{y}}. The predicted MVs have 1/2 pel accuracy and are assigned to lost high resolution frame small sub-blocks of 8x8 pixels.

A simpler solution is to give the corresponding MBs in the high resolution frame a zero MV for the MBs that are Intra-coded. However, in one embodiment of the invention, the spatial direct prediction mode specified for AVC is used to generate MVs for the Intra-MBs during the motion upsampling process. Ie. if the corresponding BL MV is zero, spatial direct prediction mode interpolates or predicts motion information from the motion fields of neighbouring BL MBs and upsamples this information.

If data partition error resilience is used, wherein a slice is distributed to several smaller packets, e.g. one for the slice header, one for MB modes and motion fields etc. and one for the residual/texture, then this case can also be invoked when the texture of BL frame is lost but the MVs of the BL are successfully received.

### 2.2 Inter-layer Error Concealment with also residual of the BL

A simple and direct solution is to set the mode of each MB to BLSkip mode, which will use the BL upsampled motion for Inter-MBs and the Intra_BL mode (ie. upsampling of the reconstructed BL) for Intra-MBs.

As found by the inventors, upsampled motion is usually more important for error concealment than the upsampled residual, since the correctly decoded BL frames have good texture information. Thus, residual prediction can be optional even when the BL residual is correctly received.

To reduce the complexity, nearest neighbouring residual interpolation can be used for its rapidity. Further, it is simple since we need not consider the motion compensation (MC) boundary during the upsampling. Both the block level upsampling and the frame level upsampling give the same result.

### 2.3 Inter-layer Error Concealment with reconstruction of the BL

In the optimal strategy described in the present invention, the reconstruction of BL frames is only enabled when one of the low-pass frames of the GOP at the EL is lost and both low-pass frames of the BL are successfully received.

### 3. Temporal motion predictor for EL is not necessary

In this case the BL is lost or the BL low-pass (LP) frame is unavailable, which means the corresponding BL frame is not good at all.
Since the BL motion can give a more accurate predictor for the EL and the motion field prediction at the same layer is more complex, Intra-Layer Error Concealment without motion is used as described above, and the motion information is copied from another frame.

### 4. Inter-layer Error Concealment when the BL is unavailable

### 4.1 EL is available

If the base_id_plus1 in slice header is 0, this means that the bit stream of the EL will not use any BL information. So we can decode the EL packet correctly, at least without any CABAC error. The slice will use the features defined in AVC.

If the base_id_plus1 is 1, the CABAC decoding will be wrong. According to the invention, in this case the whole packet is dropped and Intra-layer error concealment is done. We define the above solution as Adaptive Intra-layer error concealment. The slice is just like an AVC compliant slice and can be correctly decoded, not considering the error propagation; else the EL packet is dropped and Intra-layer error concealment is done.

### 4.2 EL is also unavailable

In this case, Intra-layer error concealment for the EL can be used, eg. motion copy.

### 5. Full strategy for EL error concealment

Based on the packet loss status of the NAL packets, the present invention provides a scenario that can handle all the possible cases simply and efficiently. The strategy is shown in Fig.3.

Before the decoding process of the EL of each GOP the status of the two low-pass (LP) frames of the current GOP and the previous GOP is known, ie. whether they are available or not. We define the LP of one layer to be available if both LP frames of the current GOP and the previous GOP are successfully received. Else, if any of them or both are lost, the status of the LP is defined to be unavailable.

It is a difficult situation if the LP is unavailable for a layer, be it BL or spatial EL. If a LP frame is unavailable for one layer, the information of this layer will be very bad because of error propagation.

As shown in Fig.3 for the worst case when BL-LP and EL-LP are lost EC1, the EL uses Intra-Layer error concealment. In the following, the term 'frame' means high-pass (HP) frame. The best case that still requires error concealment is that the EL frame is correctly received and the LP frames are also correctly received.

If the EL frame is lost while the BL (HP) frame is correctly received EC4,EC10, we can also get the motion information and use motion upsampling to reconstruct the motion information of the lost EL frame.

If a BL frame is lost and the corresponding EL frame is correctly received EC3,EC8, adaptive error concealment based on the utilization of inter-layer prediction is performed. We call this Adaptive Intra-layer error concealment. If the base_id_plusl in the slice header is 0, we can independently decode the EL. If not, we can not decode the EL packet without BL information, so we just drop this packet and use the Intra-layer error concealment at the EL.

### 6. Simple temporal scalability using forced error concealment

Since the present invention provides very simple error concealment techniques for BL and EL by simple frame copying and frame averaging, it is possible to manually drop the frames with high temporal levels in cases when the bottleneck of the real-time applications such as streaming is the decoder. For BL only decoding, the bit-stream parsing process can be ignored for the even frames at the hierarchical B-frame structure. For the dual layer decoding strategy, bit-stream parsing of both packets of BL and EL can be ignored. The simple frame copying and frame averaging saves much time and thus can improve the decoding speed.

Furthermore, based on the temporal priority of the packets, we can force losing more packets to improve the decoding speed and thus to make a good advantage of the temporal scalability of the SVC bit-stream.

In principle, a method is disclosed for error concealment of frame loss for two spatially scalable layers by the following strategy.
- Error concealment for hierarchical B frame base layer frame lost using frame copy and frame average.
- Error concealment for spatial enhancement layer frame lost using the upsampled motion field of the base layer if it is available.
- Error concealment for spatial enhancement layer frame lost optionally using the upsampled residual of the base layer if it is available.
- Error concealment for spatial enhancement layer frame lost optionally using the upsampled reconstruction only when either of enhancement layer low pass frames of the current GOP is lost and both of the low pass frames of the base layer current GOP are available.

Advantageously, the described error concealment techniques are simple and efficient, and focus on real-time decoding embedded system decoding of BL only and two spatial layer decoding, eg. on PCs.

As another advantage, the proposed error concealment can handle any possible packet loss, and in most situations will only make some simple frame level decisions before reconstructing a lost frame.

One aspect of the present invention is the usage of temporal direct mode for intra-layer error concealment, to get the motion field of a lost frame. According to this aspect, a method for reconstructing a lost image in a video environment with two or more spatial layers, wherein hierarchical B-frames are used, comprises the steps of decoding correctly received images of BL and/or EL, whereby images may be designated as reference images,
storing the images designated as reference images, whereby texture and motion information is included in the storing, detecting that data for an image are missing or unusable, detecting the layer and encoding type (I-,P-,B-frames) of the missing or unusable image,
if the missing or unusable image is a first hierarchical B-frame, determining its reference frames and determining (e.g. from its POC_ID) if it is used as reference for other frames,
if the reference frames are available, averaging the textures of the reference frames and replacing the missing frame by the averaged texture,
if the first B-frame is used as reference, storing the motion fields of the reference frames or pointers thereon, and reconstructing a second hierarchical B-frame referencing the first B-frame, wherein the motion fields of the first B-frame are used.

The method can be further specified in that the reference frames for reconstructing the motion field belong to the same layer as the missing or unusable image (intra-layer temporal prediction).

The method can be further specified in that it comprises the further steps of
determining which of the two motion fields of the first B-frame is temporally nearer to the second B-frame, and selecting only the determined motion field to reconstruct the second B-frame.

The method can be further specified in that said detecting that data for an image are unusable further comprises the steps of estimating from the encoding mode of the image that proper decoding takes longer than a maximum time, and deciding that therefore the data for said image are unusable.

The method can be further specified in that it further comprises the step of determining (if the missing or unusable image is a P-frame) the reference frame, and replacing the missing frame texture by a copy of the reference frame.

The method can be further specified in further comprising if the missing or unusable image is an I-frame, converting the frame to a P-frame and determining the temporally nearest I- or P-frame, and replacing the missing frame texture by a copy of the determined frame.

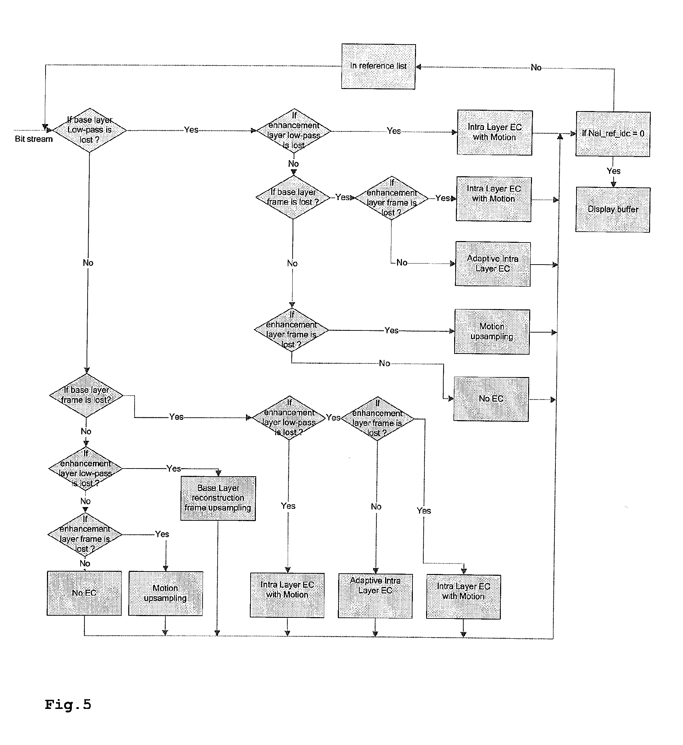

The display buffer shown in Fig.4 and 5 are constructed in the end for storing the display information (pixels).

The present disclosure focuses on the dual layer case. In principle however, the disclosed techniques can also be applied in environments with more layers. In this case, BL refers to a lower-resolution layer and EL refers to a higher-resolution layer.

The invention can be used for video decoding and respective products, particularly for scalable video.

## Claims

1. Method for reconstructing a video frame in a video sequence with at least two spatial layers being a base-layer (BL) and an enhancement-layer (EL), wherein frame coding types are intra-coded (I), predicted (P) or bi-directionally predicted (B), and wherein for a predicted frame (P-frame) at least one reference frame and for a bi-directionally predicted frame (B-frame) at least two reference frames are defined, and wherein groups of frames (GOP) are defined and a group contains per layer at least two low-pass frames being intra coded (I) or predicted (P), the method comprising the steps of
- detecting that data for a frame are missing or are unusable for reconstructing the frame;
- determining the layer and the coding type of the unusable or missing frame;
- determining which BL and EL low-pass frames are available for the current group (GOP); and
- reconstructing the missing or unusable frame by a copy, interpolation, prediction or upsampling operation according to the following conditions:
- if the missing or unusable frame is a hierarchical B-frame, then copying a reference frame of the current group, or interpolating between two reference frames of the current group;
- if the missing or unusable frame is an EL frame and its corresponding BL frame is available, then upsampling the motion information and/or residual of said BL frame;
- if the missing or unusable frame is an EL frame and both BL low-pass frames and not both EL low-pass frames of the current group are available, reconstructing and upsampling the corresponding BL frame.

2. Method according to claim 1, further comprising the following steps:
- if the determined layer is EL and the BL frame corresponding to the missing or unusable EL frame is available and the BL and EL low-pass frames for the current group (GOP) are available, then upsampling (EC10) the corresponding BL motion information;
- if the determined layer is EL and the BL frame corresponding to the missing or unusable EL frame and the BL low-pass frames for the current group (GOP) are available, and not both EL low-pass frames for the current group (GOP) are available, then reconstructing and upsampling (EC9) said corresponding BL frame;
- if the determined layer is EL and the BL frame corresponding to the missing or unusable EL frame is not available or a BL low-pass frame for the current group (GOP) is not available (EC1,EC2), then interpolating between nearest available EL frames or EL reference frames;
- if both BL low-pass frames and EL low-pass frames of the current group (GOP) are available (EC9), then reconstructing and upsampling the BL frame.

3. Method according to claim 1 or 2, further comprising the following steps:
if the determined layer is BL and
- if the type is intra coded (I-frame), then copying the nearest available reference frame;
- if the type is predicted (P-frame) and its reference frame is available, then copying its reference frame;
- if the type is bi-directionally predicted (B-frame) and its corresponding reference frames are available, then interpolating between its corresponding reference frames;
- if one or both reference frames are missing and the corresponding EL frame is available, then reconstructing and subsampling the corresponding EL frame;
- if one or both reference frames are missing and the corresponding EL frame is not available, then predicting from or interpolating between the nearest available BL frames.

4. Method according to any of the preceding claims, further comprising the step of storing the reconstructed frame if it has an even picture order count (POC) number, as reference frame for other frames.

5. Method according to any of the preceding claims, wherein said upsampling the motion information and/or residual of a BL frame is further specified in that for inter-coded (I) EL macroblocks the motion information of the corresponding BL macroblock is upsampled, and for intra-coded (P,B) EL macroblocks the residual of the corresponding BL macroblock is upsampled.

6. Method according to any of the preceding claims, wherein the motion information is predicted from spatially adjacent neighbouring macroblocks (spatial direct prediction) when upsampling the corresponding BL motion information, if the corresponding BL macroblock is intra-coded.

7. Method according to any of the preceding claims, further comprising the steps of
- decoding correctly received frames of the BL and the EL, whereby frames may be designated as reference frames;
- storing frames designated as reference frames, whereby texture and motion information is included in the storing;
- if the missing or unusable frame is a first hierarchical B-frame, determining its reference frames and determining if it is used as reference for other frames;
- if the reference frames are available, averaging the textures of the reference frames and replacing the missing frame by the averaged texture;
- if the first B-frame is used as reference for at least one second frame, storing the motion fields of the reference frames or pointers thereon; and
- reconstructing a second frame referencing the first B-frame, wherein said motion fields or pointers thereon of the first B-frame are used.

8. Method according to the preceding claim, wherein the reference frames for reconstructing the motion field belong to the same layer as the missing or unusable frame (intra-layer temporal prediction).

9. Method according to claim 7 or 8, further comprising the steps of
- determining which of the two motion fields of the first B-frame is temporally nearer to the second frame; and
- selecting only the determined motion field to reconstruct the second frame.

10. Method according to any of the preceding claims, wherein said detecting that data for a frame are unusable further comprises the steps of
- estimating from the encoding mode of a received frame that proper decoding takes longer than a maximum time; and
- upon said estimating, deciding that the data for said frame are unusable.

11. Apparatus for reconstructing a video frame in a video sequence with at least two spatial layers being a base-layer (BL) and an enhancement-layer (EL), wherein frame coding types are intra-coded (I), predicted (P) or bi-directionally predicted (B), and wherein for a predicted frame (P-frame) at least one reference frame and for a bi-directionally predicted frame (B-frame) at least two reference frames are defined, and wherein groups of frames (GOP) are defined and a group contains per layer at least two low-pass frames being intra coded (I) or predicted (P), the apparatus comprising
- means for detecting that data for a frame are missing or are unusable for reconstructing the frame;
- means for determining the layer and the coding type of the unusable or missing frame;
- means for determining which BL and EL low-pass frames are available for the current group (GOP); and
- means for reconstructing the missing or unusable frame by a copy, interpolation, prediction or upsampling operation according to the following conditions:
- means for copying a reference frame of the current group, or for interpolating between two reference frames of the current group, if the missing or unusable frame is a hierarchical B-frame;
- means for upsampling the motion information and/or residual of said BL frame if the missing or unusable frame is an EL frame and its corresponding BL frame is available;
- means for reconstructing and upsampling the corresponding BL frame if the missing or unusable frame is an EL frame and both BL low-pass frames and not both EL low-pass frames of the current group are available.

12. Apparatus according to claim 11, further comprising
- means for upsampling (EC10) corresponding BL motion information if the determined layer is EL and the BL frame corresponding to the missing or unusable EL frame is available and the BL and EL low-pass frames for the current group (GOP) are available;
- means for reconstructing and upsampling (EC9) the corresponding BL frame if the determined layer is EL and the BL frame corresponding to the missing or unusable EL frame and the BL low-pass frames for the current group (GOP) are available, and not both EL low-pass frames for the current group (GOP) are available;
- means for interpolating between the nearest available EL frames or EL reference frames if the determined layer is EL and the BL frame corresponding to the missing or unusable EL frame is not available or a BL low-pass frame for the current group (GOP) is not available (EC1,EC2);
- means for reconstructing and upsampling the BL frame if both BL low-pass frames and EL low-pass frames of the current group (GOP) are available (EC9).

13. Apparatus according to claim 11 or 12, further comprising
- means for determining and means for copying the nearest available reference frame if the determined layer is BL and the type is intra coded (I-frame);
- means for copying the reference frame if the determined layer is BL and the type is predicted (P-frame) and the reference frame is available;
- means for interpolating between the reference frames if the determined layer is BL and the type is bi-directionally predicted (B-frame) and its corresponding reference frames are available;
- means for reconstructing and subsampling the corresponding EL frame if the determined layer is BL and one or both reference frames are missing and the corresponding EL frame is available; and
- means for predicting from or interpolating between the nearest available BL frames if one or both reference frames are missing and the corresponding EL frame is not available.

14. Apparatus according to any of the claims 11-13, wherein the means for detecting that data for a frame are unusable further comprises
- means for estimating from the encoding mode of a received frame that proper decoding takes longer than a maximum time; and
- means for deciding upon said estimating that the data for said frame are unusable.
